(19) Europäisches Patentamt / European Patent Office / Office européen des brevets

(11) **EP 1 843 257 A1**

(12) **EUROPEAN PATENT APPLICATION**

(43) Date of publication:
**10.10.2007 Bulletin 2007/41**

(51) Int Cl.:
*G06F 17/30* (2006.01)       *G06F 17/27* (2006.01)

(21) Application number: **06251886.5**

(22) Date of filing: **03.04.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **BRITISH TELECOMMUNICATIONS public limited company**<br>**London EC1A 7AJ (GB)** | (72) Inventor: **The designation of the inventor has not yet been filed**<br><br>(74) Representative: **Lloyd, Barry George William et al**<br>**BT Group Legal**<br>**Intellectual Property Department**<br>**PP C5A**<br>**BT Centre**<br>**81 Newgate Street**<br>**London EC1A 7AJ (GB)** |

(54) **Methods and systems of indexing and retrieving documents**

(57)   Embodiments of the invention relate to computer-implemented methods of indexing documents in a document repository (210-212) comprising splitting the documents (D1-D3) into subdocuments (Dla-D3d), each subdocument relating to a theme, by identifying semantic relationships between entities in the document and determining changes in theme at least in part on the basis of the distribution of semantically-related entities, and performing an indexing operation by generating and storing, in a searchable index, metadata associated with the respective subdocuments.

Embodiments of the invention also relate to retrieving documents of interest from a document repository (210-212), including indexing documents according to the aforementioned method, submitting a search context, using the search context, on the basis of the categories that have been associated with the subdocuments, to identify documents of interest by reference to the metadata, and returning information relating to the identified documents of interest.

Figure 6

**Description**

Field of the Invention

The present invention relates to methods of and systems for searching for documents in a document repository. In particular, though not exclusively, embodiments of the invention apply document pre-processing, in which the documents are split into subdocuments and then each subdocument is associated with one or more categories, in order to assist in searching.

Background of the Invention

For many years, the growth of the Internet, and even more so of the World Wide Web (Web), has been considerable. The Web provides a wealth of information, including text-based documents, the volume of which is growing all the time. While, on the one hand, the Web as an information repository is extremely valuable, and the value clearly increases as more information is added, on the other hand it is becoming more and more difficult to find specific information efficiently using traditional search engine technology. In other words, as the value of the Web rises, due to more information being added, the cost of use associated with a decreased efficiency also rises, which is undesirable.

While the Web is the most well-known and common service on the Internet, it will be appreciated that there are other services, such as Web based Intranets and on-line databases, which are repositories of information that can be accessed and searched, for example, using search engines. Unless specified or the context dictates otherwise, the principles taught herein apply equally to the Web, to these the other services, and even to documents stored in extranets, intranets, local data banks and the like; and references to Web should be taken broadly to cover any other on-line collection of documents.

Typically a search engine is a software process accessible from a Web site (or Intranet site), which runs on a Web server connected into the Internet network. A user (which may be a person or another process) typically interacts with a search engine by downloading from the Web site, to their personal (or client) computer, a standard interface of the search engine. The user interacts with the interface to create and submit a search query, which is typically transmitted as a formatted text string of characters to the search engine. Such queries usually comprise one or more keywords. In response to a search query, the search engine carries out the search and returns to the user, hopefully, useful search results, or 'hits', in the form of a set of hyperlinks pointing to documents on the Web. The hyperlinks are usually accompanied by respective document titles, so that users can more readily identify which documents are likely to be most relevant. In some instances, the document titles themselves are presented as hyperlinks. It is also possible to generate and send a search query text string without using the standard user interface, as long as the string complies with the format expected by the search engine.

Typically, search results are ranked, so that documents that are likely to be most relevant occur higher in the list of returned hyperlinks. Ranking may be based on a simple statistical analysis, for example relating to how many times the keywords used in a query occur in the document; the perception being that there is a correlation between the number of times a keyword is used in a document and the relevance of the document to the search query.

Additionally, some search engines return a 'taster' with each hyperlink. A taster is a relatively small section of text, which is extracted from the document, which, it is perceived, will improve the ability of a user to distinguish between more and less relevant hits.

In order to provide search results, most search engines, or associated automated processes, rely on a significant amount of pre-processing of documents. For example, most known search engines automatically access Web sites, by following hyperlinks, and retrieve documents in order to catalogue them in some way. Cataloguing in this context means that the documents are analysed at least to identify the main keywords contained therein. In addition, analysing may involve identifying a document title, deriving rankings for keywords and extracting taster text. This information, or metadata, about each document is stored in a searchable database of the search engine, and is used to generate the search results.

On receipt of a search query, a search engine presents the query to the database of document metadata in order to generate search results, which are formatted and returned to the user as a results Web page or pages.

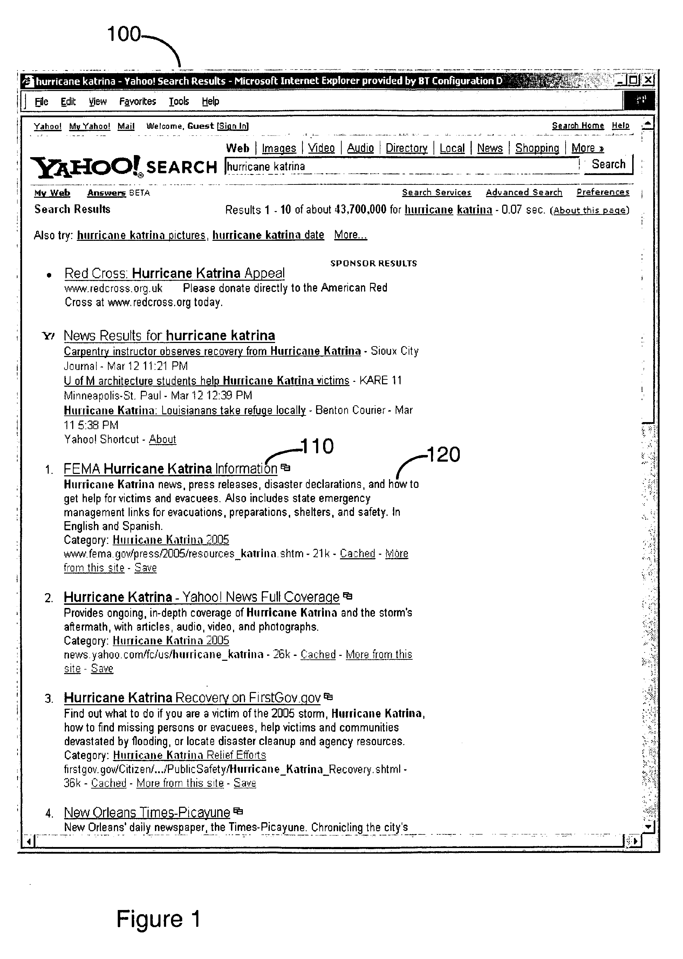

Known search engines in essence attempt to answer user queries by presenting a list of documents to the user. As indicated, the list may be generated using some kind of statistical analysis of the documents and the query. It is then left to the user to read the documents to find the information that they are actually looking for. In practice, often, the information actually required is contained in a result that is not returned in the top set of results and the user has to 'click' through several screens of results in order to find the necessary information. An exemplary results page is shown in the screenshot 100 in Figure 1, where a search for 'Hurricane Katrina' has been made, and over 43 Million hits have been identified. As also shown in Figure 1, each hit (numbered 1 to 4 on the left hand side of the image) is accompanied by a title 110, which acts as the respective hyperlink, and a section of taster text 120.

At least some embodiments of aspects of the present invention aim to improve searching efficiency on the Web or the like.

## Summary of the Invention.

According to a first aspect, the present invention provides a computer-implemented method of indexing documents in a document repository comprising splitting the documents into subdocuments, each subdocument relating to a theme, by identifying semantic relationships between entities in the document and determining changes in theme at least in part on the basis of the distribution of semantically-related entities, and performing an indexing operation by generating and storing, in a searchable index, metadata associated with the respective subdocuments.

Advantageously, according to embodiments of the invention, users may be presented with only the parts of documents, for example the subdocuments or parts thereof, that are deemed relevant, rather than whole documents that may contain irrelevant material. Additionally, as will be described hereinafter, users may be presented with a consolidated summary of the most relevant subdocuments meaning that they do not necessarily have to view and analyse a series of document results.

The document repository may be one of: the Web, a subset of the Web, a different Internet service, an extranet, an intranet, an on-line database or even a store on a local computer system. Indeed, the document repository may be any combination of the aforementioned repositories.

The method may involve identifying semantic relationships between entities referred to by different associated textual references. For example, a person may be referred to as "Mr. X", "X", "he" or "the husband", and it is important to be able to take account of all these references being to the same person. In this case, the method may comprise applying Named Entity Extraction in order to relate different associated textual references to the same entity.

Alternatively, or in addition, the method may comprise establishing a semantic distance between different entities in the document and relating entities according to the semantic distance. For example, some entities may be closely related and have a relatively short semantic distance and less related entities may have a relatively long semantic distance. Ways of calculating semantic distance will be described hereinafter.

One entity may be a subcategory of another related entity. In some cases one entity may have a sub or super category relationship with a related entity. In some other cases, one entity may be related to another entity by an inferred relationship. Such an inference may be drawn using a predetermined rule or axiom.

In some instances, a subdocument may include two component portions of text that are lexically dissimilar. However, the components may be semantically related, for example, by a first one of the components including an entity that is semantically related to an entity in a second one of the components.

In any event, a plurality of the entities may be related by, and/or part of, an ontology. Alternatively, a simple list of entities may be used. The entities in such a list may not be generally related to each other in any way. However, an advantage of using a hierarchical approach is that reasoning may be applied, where reasoning makes use of the relationships between the entities.

Advantageously, subdocuments may be generated by partitioning the documents into coherent multi-paragraph units, which correspond to a sequence of subtopical passages. A further alternative would be to split documents into subdocuments using the paragraph boundaries. This is rather crude, however, since themes may be carried over into subsequent paragraphs.

Each subdocument may be associated with one or more categories from a predetermined set of categories, according to the content of the subdocument. The categories may be arranged in a hierarchy of categories, and may even reside in an ontology of categories. Categories may relate to topics, themes and may be classes or instances (or both) in an ontology.

According to embodiments of the present invention, the metadata may include the categories, or references to the categories, that are associated with each subdocument. For example, the reference to the categories might be pointers, or the like, to a repository containing the categories.

The method may include assigning a relevance score to each associated category, the relevance score indicating a derived degree of relevance of the category to the respective subdocument. For example, the relevance score might reflect how often certain characteristics or features of the subdocument occur, where it is known that the certain characteristics or features are associated with the categories. Another potential method of determining relevance is to manually assess the relevance of subdocuments to categories. This manual method would typically be carried out by an expert in the domain of the categories in question.

In any event, the metadata may include pointers to documents in the repository. The pointers may identify the locations of subdocuments within the documents.

According to a second aspect, the present invention provides a method of retrieving documents of interest from a document repository, including: indexing documents according to an embodiment of the first aspect of the invention; submitting a search context; using the search context, on the basis of the categories that have been associated with the subdocuments, to identify documents of interest by reference to the metadata; and returning information relating to the identified documents of interest.

The information relating to the identified documents of interest may comprise a consolidated document. Then, the consolidated document may be generated to include text from at least some of the subdocuments and a link, associated with each subdocument text, to the respective document in the document repository.

The search context may comprise a search query. Additionally, or alternatively, the search context may comprise a user interest profile including categories of interest to the respective user. Then, the text of the subdocuments may be ordered according to the categories of interest.

Each category in the user interest profile may have an associated weighting indicating a degree of interest to the user. Then, the text of the subdocuments may be ordered according to the degree of interest. Additionally, or alternatively, the amount of text provided for each subdocument may also vary depending on the degree of interest; for example, with relatively more text being provided if there is a relatively high degree of interest.

The consolidated document may also display categories that are relevant to the documents of interest. The categories may be arranged according to the degree of relevance of the categories to the documents of interest. The consolidated document may be arranged so that a user can select one or more of the displayed categories, causing a re-ordering of the documents into a new consolidated document, in accord with the category that was selected.

Furthermore, the information relating to the identified documents of interest may comprise one or more summarised extracts of text. The summarised text may comprise a summarised portion of text from a document or from a subdocument.

According to a third aspect, the present invention provides a system adapted to perform a method according to an embodiment of the present invention.

Other aspects and embodiments of the present invention include search engine processes and systems adapted to retrieve documents of interest from a document repository, the documents having been indexed, as described herein, including receiving a submitted search context, using the search context, on the basis of the categories that have been associated with the sub-documents, to identify documents of interest by reference to the metadata, and returning information relating to the identified documents of interest. Also, aspects and embodiments of the invention include pre-processing software and systems adapted to pre-process documents, as described herein. Furthermore, aspects and embodiments of the present invention include computer program products including instructions encoded on a computer-readable medium and configured to enable a process to perform a method according to any other aspect or embodiment of the present invention.

Brief Description of the Drawings

Aspects and embodiment of the present invention will now be described, by way of example only, with reference to the accompanying drawings, of which:

Figure 1 is an image comprising search results generated by a known Web search engine;

Figure 2 is a flow diagram representing three stages of an illustrative scenario, which demonstrates features of the present invention;

Figure 3 is a block diagram of a system which operates in accord with embodiments of the present invention;

Figure 4 is a flow diagram showing the steps involved in a method of pre-processing documents;

Figure 5 is a high level block diagram of a pre-processor, which is used to classify documents according to embodiments of the present invention;

Figure 6 is a block diagram illustrating the relationships between documents, respective metadata and an ontology;

Figure 7 is a flow diagram showing the steps involved in TextTiling;

Figure 8 is a flow diagram showing the steps involved in Information Extraction, which is used to prepare documents for TextTiling in accord with embodiments of the present invention;

Figure 9 is a flow diagram showing the steps involved in document classification, as applied in embodiments of the present invention;

Figure 10a is tree diagram illustrating an ontology of categories, of the kind used to classify documents according to embodiments of the present invention;

Figure 10b is tree diagram similar to the one in Figure 10a, with the addition of instances of classes in the ontology;

Figure 11 is a tree diagram illustrating a user interest profile, which is used according to embodiments of the present invention to rank search results;

Figure 12 is an example of a consolidated document, which is used to present search results according to embodiments of the present invention;

Figure 13 is a block diagram that summarises the stages of the illustrative scenario;

Figure 14 is a tree diagram illustrating an exemplary extract from a biological ontology;

Figure 15 is a tree diagram illustrating an exemplary extract from a geographical ontology; and

Figure 16 is a tree diagram illustrating an exemplary extract from a commercial ontology.

Detailed Description of the Invention

Embodiments of the present invention will now be described with reference to an illustrative practical scenario, in which three independent stages are involved in delivering improved search results to a user who is searching for specific material, which is stored on various Web sites connected via the Internet.

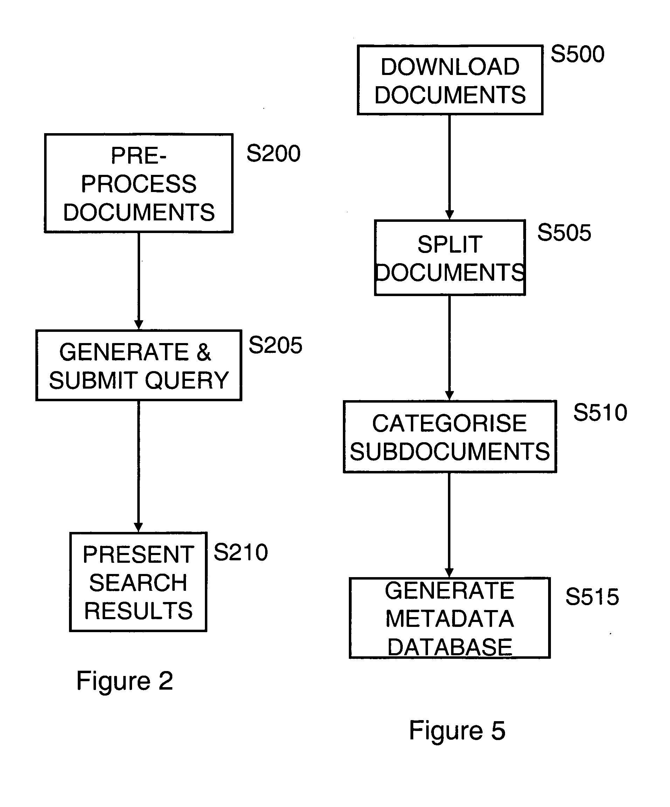

The three stages are illustrated in the flow chart of Figure 2. A first, pre-processing stage (S200) involves pre-processing documents that are accessible to a user from Web sites, which are distributed across the Web. A second, searching stage (S205) involves generating and submitting a query, which is aimed at returning improved search results from the pre-processed documents. A third, presentation stage (S210) formats the search results in a convenient manner.

In the context of the present scenario, pre-processing involves indexing the documents and producing certain metadata for each document that accurately reflects the content of the document and a location from where document can be downloaded by the user.

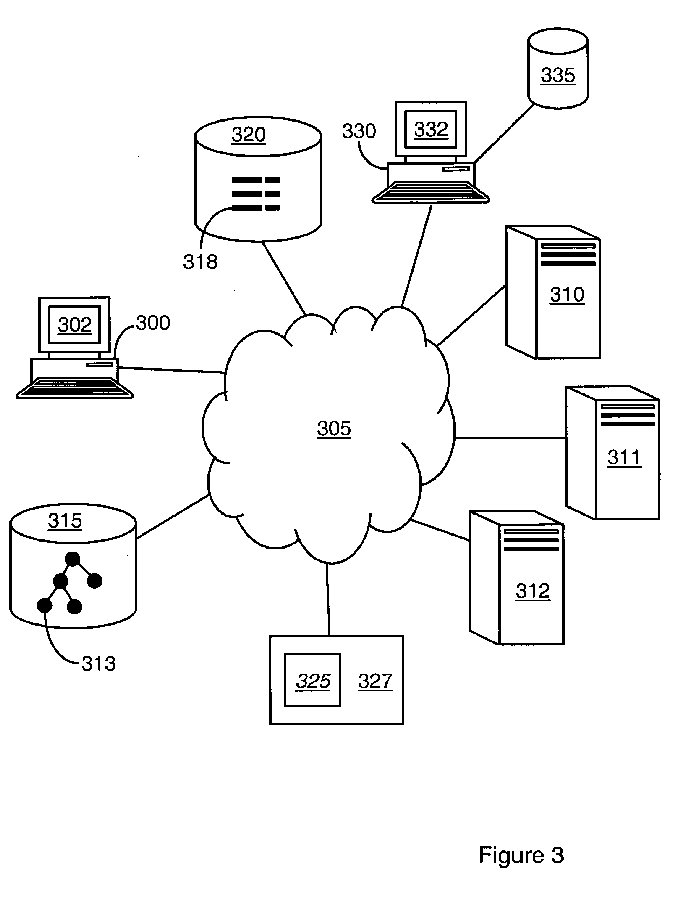

The illustrative scenario will be described with reference to the components that are shown in the schematic block diagram in Figure 3. According to Figure 3, a pre-processing process 300, which, for convenience, will be referred to simply as the 'pre-processor', resides on a client computer 302, which is attached to the Internet 305. The pre-processor 300 in this case is computer program, or programs, which is or are stored in one or more program files on the client computer 302 and can be executed to run on the client computer, as required. The programs may be written in Java™ or C++, for example. The pre-processor 300 is arranged to download documents, via the Internet 305, from various Web servers 310, 311, 312, which are also attached to the Internet. The pre-processor 300 is also programmed to access information relating to a pre-defined ontology of categories 313, which is stored on an ontology database 315, which is also attached to the Internet 305. The process by which the pre-processor processes downloaded documents will be described in detail hereinafter. A result of the first, pre-processing stage (S200) is the metadata 318, which is stored in a metadata database 320, which is attached to the Internet 305.

The metadata database 320 can be accessed by a search engine process 325, which for convenience will be referred to simply as the 'search engine', which runs on another Web server computer 327, which is attached to the Internet. The search engine 325 in this case is also computer program, or programs, which is or are stored in one or more program files on the search engine Web server computer 327 and can be executed to run as required. Again, the programs may be written in Java™ or C++, for example. The search engine 325 is used by a user, who submits a search query via a browser process 330, which runs on a user client computer 332, which is also attached to the Internet 305. The user has a user interest profile 335, which is stored on the local client computer 330, and which may be used during a searching stage, as will be described in more detail hereinafter.

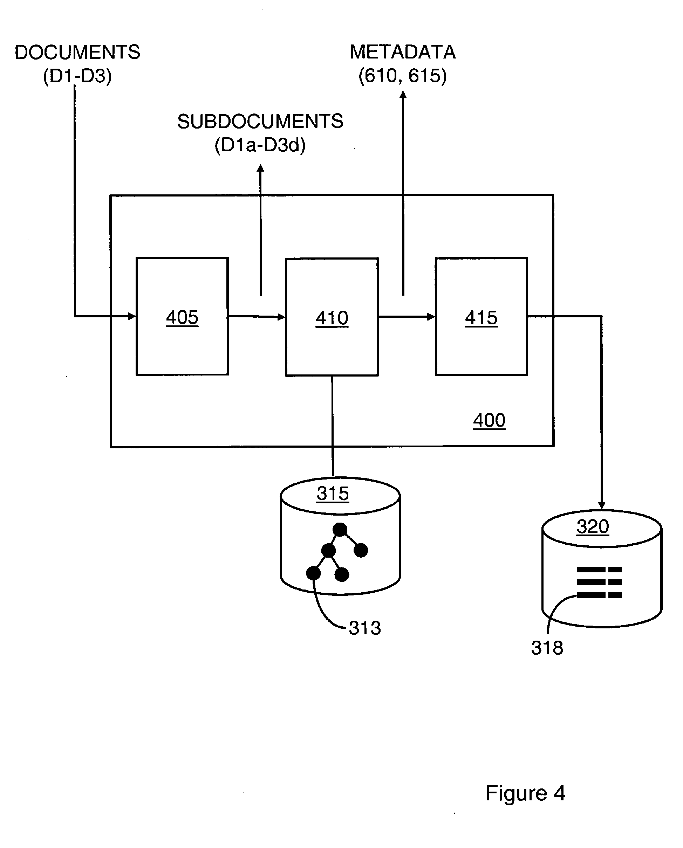

The pre-processor 300 is illustrated by way of example in more detail in the block diagram in Figure 4. The pre-processor 300 comprises two document processing routines, 405 and 410. A first document processing routine is a document splitter 405, which is arranged to split downloaded documents into sub-documents, and a second document processing routine is a document categoriser 410, which is arranged to classify the subdocuments against an ontology 313. A third subroutine 415 of the pre-processor is arranged to take output from the splitter 405 and categoriser 410 and generate, or augment, the metadata 318 in the metadata database 320.

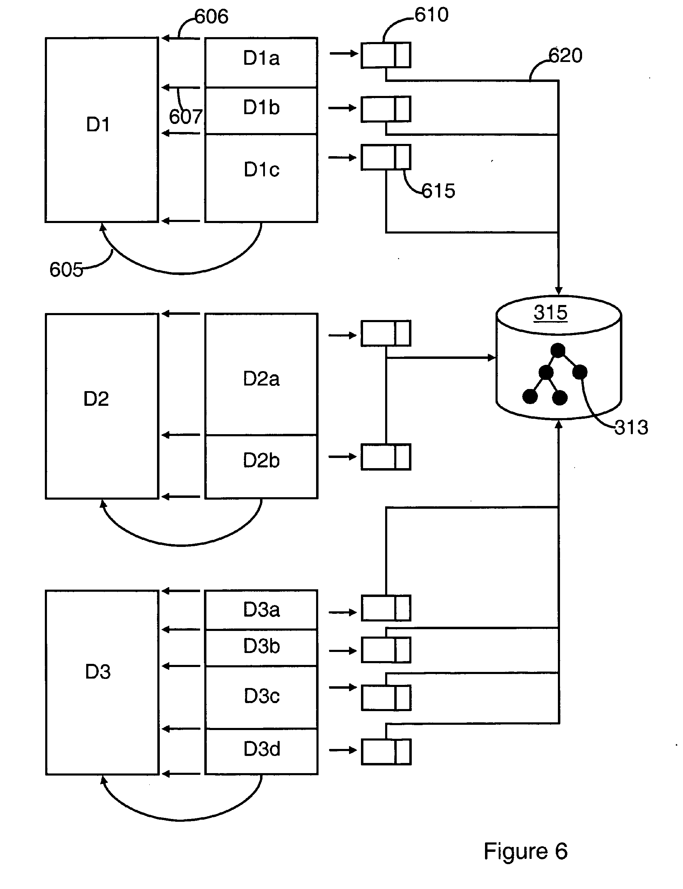

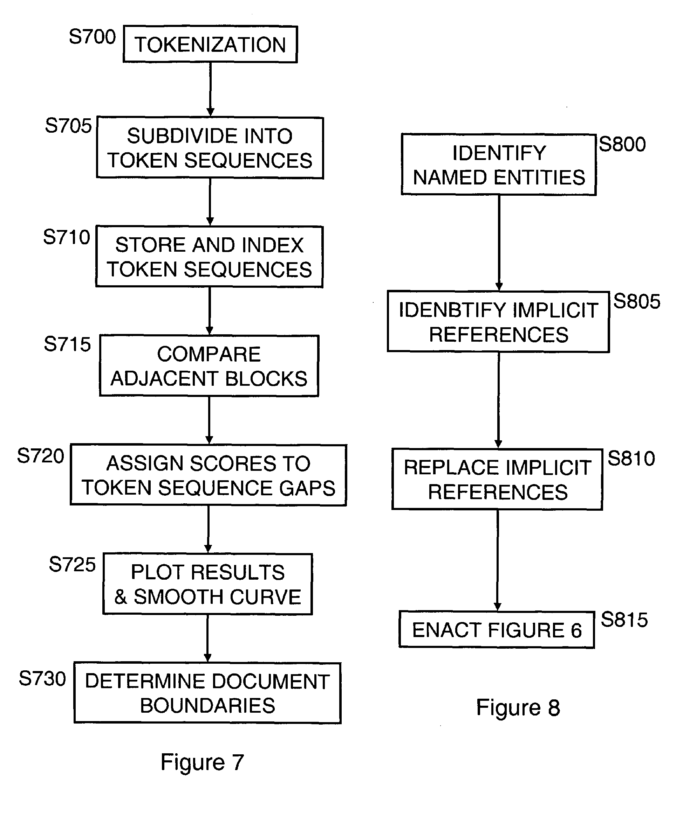

The first, pre-processing stage (S200) of the illustrative scenario will now be described at a high level, by way of example, with reference to the flow diagram in Figure 5 and the block diagram in Figure 6.

In a first step (S500), the pre-processor 300 is arranged to download documents from the various Web sites, 310-312. For the purposes of illustration, only three sample documents are shown in the diagram in Figure 6, identified as Document 1 (D1), Document 2 (D2) and Document 3 (D3). In a next step (S505), the document splitter 405 splits the documents into subdocuments on the basis of themes, which comprise related subject matter, as will be described in detail hereinafter. For example, as shown in Figure 6, document D1 is split into three subdocuments D1a-D1c.

Thus, the input to the splitter 305 is a set of documents D1-D3 and the output from the splitter is a set of subdocuments D1a-D1c, D2a-D2b and D3a-D3d. In a practical embodiment, subdocuments will typically exist as metadata about the original documents. For example, a subdocument is preferably represented as a link 605 to the original document and a start pointer 606 and an end pointer 607, to respective positions within the original document, instead of comprising an actual copy of the relevant document text. The links may be Universal Resource Locators (URL).

In a next step (S510), the document categoriser 410 categorises each subdocument against the ontology of categories 313 and associates each subdocument with one or more of the categories. It is preferred that the categoriser 410 also assigns a relevance score to each of the categories, denoting to what degree each category relates to the content of the respective subdocument. Thus, each subdocument has an associated list 610 of one or more categories and a relevance score 615 for each category. Each subdocument becomes associated with the ontology 313, via each of the categories.

Thus, the input to the categoriser 410 comprises subdocuments and the output from the categoriser is further metadata, which augments the existing subdocument metadata, comprising one or more categories 610 and, preferably, a degree of relevance 615 for each of those categories based on how closely the subdocuments matched with distinctive features of the categories. The categories include links 620 to a repository of categories, in this example a predetermined ontology of categories 313, which is stored in an ontology database 315.

In a final step (S515), the pre-processor 300 builds or adds to the metadata database 318, by collating and storing the metadata 610, 615 in a searchable manner for each processed subdocument. The metadata database 318 is hereafter the basis for searching using the search engine 325, according to embodiments of the present invention, as will be described in more detail hereinafter.

The document splitter 405 will now be described in more detail.

In the present illustrative scenario, each document which is downloaded to be indexed for searching is split into one or more subdocuments, wherein subdocument divisions are determined automatically, by computer-implemented means, using techniques to detect change in category. One way of splitting documents in this way is by evaluating the number of occurrences of keywords or key phrases throughout the text and establishing boundaries where the number of occurrences of one grouping of keywords and key phrases reduces while the number of occurrences of another grouping of keywords and key phrases increases.

One known technique for splitting documents in this way is called TextTiling, as described in Hearst, M., 'Multi-Paragraph Segmentation of Expository Text', Proceedings of the 32nd Meeting of the Association for Computational Linguistics, Los Cruces, NM, June 1994. TextTiling can be described as a method for partitioning full-length text documents into coherent multi-paragraph units, which correspond to a sequence of subtopical passages. The algorithm assumes that a set of words is in use during the course of a given subtopical discussion, and, when that subtopic changes, a significant proportion of the associated vocabulary changes as well. A first variant of the method compares, for a given window size, each pair of adjacent blocks of text according to how lexically similar they are. Blocks, for example, could be sentences, paragraphs or even fixed length passages of text in a document. This variant assumes that the more similar the two blocks of text are, the more likely it is that a current subtopic continues, and, conversely, if two adjacent blocks of text are dissimilar, this implies a change in subtopic flow. Another variant of the method processes a document by keeping track of active chains of repeated terms, where membership in a chain is determined by location in the text. This variant determines subtopic flow by recording where in the discourse the bulk of one set of chains ends and a new set of chains begins.

A simple example of TextTiling will now be described with reference to the flow diagram in Figure 7.

According to a first Tokenization step (S700), input text is divided into individual lexical units, called tokens. Herein, a lexical unit may be a word or a word combination that has a recognised meaning. For example, the term "World Wide Web" would be classed as a single lexical unit in this context.

In a next step (S705), the text is subdivided into token sequences, which each comprise $\omega$=20 consecutive tokens. It has been established that setting $\omega$=20 works well for many texts. However, other values of $\omega$ can be used for certain kinds of text.

Next (S710), each token is stored in a data table along with a record of the token-sequence number it occurs in and how frequently it appears in the token-sequence. Very frequent words, such as "a", "the", "and" and the like are eliminated from the analysis, as they typically add no useful information.

In a next step (S715), adjacent pairs of blocks of token-sequences are compared for overall lexical similarity. Herein, a block comprises $k$=6 token sequences, although, again, different block sizes are found to be optimum for certain kinds of text.

The result of the comparison is a set of similarity scores, which are computed for every so-called token-sequence gap number. More specifically, in a next step (S720), a score is assigned to token-sequence gap $i$, which corresponds to how similar the token-sequences from token-sequence $i-k$ through $i$ are to the token-sequences from $i+1$ to $i+k+1$. It should be noted that this moving window approach means that each token-sequence appears in $k * 2$ similarity computations.

Similarity between blocks is calculated using a cosine measure, given two text blocks $b_1$ and $b_2$, each with $k$ token-sequences, using the following equation:

$$sim(b_1,b_2) = \frac{\sum_t \omega_{t,b_1} \omega_{t,b_2}}{\sqrt{\sum_t \omega_{t,b_1}^2 \sum_{t=1}^n \omega_{t,b_2}^2}}$$

where $t$ ranges over all the terms that have been registered during the tokenization step, and $\omega_{t,b_1}$ is the weight assigned to term $t$ in block $b_1$. In this example, the weights on the terms are simply their frequency within the block. Thus, if the similarity score between two blocks is high, then the blocks have many terms in common. This formula yields a score between 0 and 1, inclusive.

The calculated similarity scores can be plotted (S725) as token-sequence gap number against similarity score, where token-sequence gap number i is plotted on the x-axis. The plot is preferably smoothed, for example using one round of average smoothing with a window size of three. Other smoothing methods may, of course, be applied.

In a final step (S730), boundaries are determined by observing the changes in the sequence of similarity scores. According to Hearst, the token-sequence gap numbers are ordered according to how steeply the slopes of the plot are to either side of the token-sequence gap, rather than by their absolute similarity score. For a given token-sequence gap i, the algorithm looks at the scores of the token-sequence gaps to the left of i as long are their values are increasing. When the values to the left peak out, the difference between the score at the peak and the score at i is recorded. The same procedure takes place with the token-sequence gaps to the right of i; their scores are examined as long as they continue to rise. The relative height of the peak to the right of i is added to the relative height of the peak to the left. A gap occurring at a peak will have a score of zero since neither of its neighbours is higher than it. These new scores, called depth scores, corresponding to how sharp a change occurs on both sides of the token-sequence gap, are then sorted. Segment boundaries are assigned to the token-sequence gaps with the largest corresponding scores, adjusted as necessary to correspond to true paragraph breaks. A proviso check is done that prevents assignment of very close adjacent segment boundaries. It is suggested that there must be at least three intervening token-sequences between boundaries. This helps control for the fact that many texts have spurious header information and single-sentence paragraphs. Given the foregoing information, boundaries can be placed in a significant number of different ways. For example, Hearst proposes a method in which the number of boundaries to assign to a document, which scales with the size of the document and is sensitive to the patterns of similarity scores that it produces, is a function of the average and standard deviations of the depth scores for the text under analysis. Then, specifically, a boundary is drawn only if the depth score exceeds $\bar{s}\text{-}\sigma/2$.

Other, alternative approaches for splitting documents are described in Choi, 'Linear text segmentation: approaches, advances and applications', in Proc. of CLUK3, 2000 and Beeferman et al, 'Statistical models for text segmentation', Machine Learning, 34(1--3):177--210. 1999.

Of course, there may be other appropriate ways of splitting documents for the present purposes, none of which are excluded from use herein.

In preferred embodiments, the process for splitting documents is an adapted version of TextTiling or one of the other known techniques. Specifically, the present inventor has appreciated that the accuracy of approaches such as TextTiling can be improved by using Named Entity Extraction, which is also known as Information Extraction (IE).

Typically, the goal of IE is to extract from documents (which may be in a variety of languages) salient facts about pre-specified types of events, entities or relationships. Events are pre-specified insofar as IE can be tailored to deal with different kinds of texts; for example technical or autobiographical texts. Tailoring of IE in this way is known, and a detailed description of tailoring is beyond the scope of the present description. The facts are then usually entered automatically into a database, which may then be used to analyse the data for trends, to give a natural language summary, or simply to serve for on-line access. IE is described in Cunningham, H., 'Information Extraction, Automatic', Encyclopedia of Language and Linguistics, 2nd Edition.

As used in the present context, IE is used first to identify different textual references that refer to the same named entities, which appear in the document text. Named entities include items such as people, places, organisations and dates.

IE can work at various different levels, and each level finds utility according to embodiments of the present invention. For example, it will be appreciated that many named entities can be referred to using different words in the document. For example, the explicit term "Tony Blair", the current Prime Minister of United Kingdom, might also be referred to implicitly in a document as "Mr. Blair", "the Prime Minister", "the PM", "he" and, in some instances, the "UK Government". In other words, all these terms relate to or imply "Tony Blair". It is known that IE can be used to associate occurrences of "he" to "Mr. Blair". This is generally referred to as anaphoric resolution, which generally matches occurrences of pronouns ("he") with their object ("Mr. Blair"). Also, IE can be used to associate proper-nouns, using proper noun resolution. For example, proper noun resolution can associate "Mr. Blair" and "Tony Blair". Anaphoric resolution and proper noun resolution are both kinds of coreference resolution, in the realm of IE.

It is also known that IE can match named entities with descriptive information. For example, IE techniques can associate "Mr. Blair" with "The UK Government".

IE can also be used to generate even more complex associations between named entities and references or implied references thereto.

Additionally, a known thesaurus technique could be used to identify synonyms, in order to associate different words having the same meaning. For example, 'Holland' could be associated with 'the Netherlands' using an appropriate thesaurus.

The present inventor has appreciated that TextTiling applied to many documents can generate unnecessary subdocuments, due to named entities within the text being referred to differently, for example using different semantics, in neighbouring blocks of text. For example, if a first block of text refers to "George W. Bush" and a second block of text refers to "The President", TextTiling alone might tend to split the two blocks into separate subdocuments. Such a split would be erroneous, since, although the vocabulary and lexical structure had changed, the category had not. As a result, a search to find occurrences of "George W. Bush" might find the first subdocument but not the second, even though the second would be of equal interest to the searcher.

According to a first set of embodiments, therefore, a document is split by applying TextTiling principles while taking account of changes in named entity, rather than just taking account of changes in semantics or vocabulary. TextTiling might be applied purely to identified named entities (and respective references) or might be applied taking account of both changing vocabulary and named entities (and respective references), with appropriate weightings being given to the results of each method. Other embodiments, in addition, or alternatively, apply reasoning to assist in splitting documents into subdocuments, as will be described hereinafter.

The distribution of the named entities in the text should thus allow an improvement to be made in determining sub-document divisions, since, although the words may have changed, an entity, and thus the subject, might not have done. It will be appreciated that, while the documents need to have been split for access by the search stage, which will be described in detail hereinafter, it is not essential that they have been split, for that search stage, by using any of the methods that have been particularly described herein.

An adapted algorithm for TextTiling documents that have been through IE will now be described with reference to the flow diagram in Figure 8.

According to Figure 8, in a first step (S800), the IE is applied to the documents to identify specific named entities. In a next step (S805), the documents are processed in order to identify different textual references to the specific named entities that were identified in the first step. Next (S810), the references are replaced in the text by the respective named entities. It would also be possible to associate or link each reference in the text to the respective explicit occurrences, rather than actually replacing it. Finally (S815), the process of Figure 7 is applied to the documents, starting with tokenization.

According to the foregoing process, the documents are pre-processed so that all references to specific named entities are replaced by (or referenced to) a respective, specific named entity. In this way, TextTiling can be applied in a far more efficient manner, wherein there should not be any erroneous subdivisions in documents, which might otherwise occur when changing between different ways of referring to entities.

The document categoriser 410 will now be described in more detail.

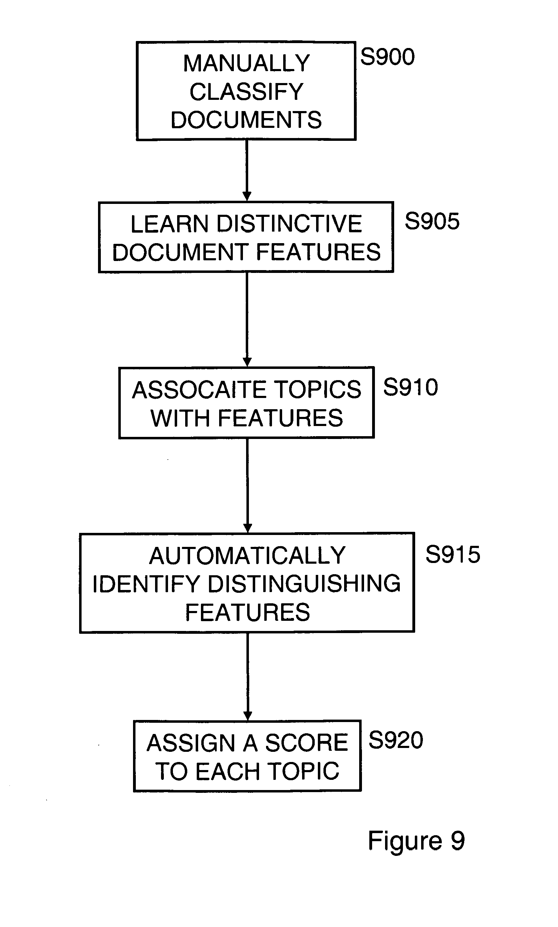

The document categoriser 410 preferably uses a known classification approach, such as described in Grobelnik et al 'Efficient text categorization', Text Mining workshop on the 10th European Conference on Machine Learning ECML9. This kind of classification approach uses machine learning to classify documents, as will now be described with reference to the flow diagram in Figure 9.

According to Figure 9, in a first step (S900), a collection of sample documents is manually classified against a set of categories. In this process, typically, a skilled person, or people, review the documents and assign one or more categories to the documents in accordance with the subject matter of the documents. In a next step (S905), a computer program is used to learn the distinctive features of each document and associate those features with the assigned categories. For example, a distinctive feature might be a word that occurs frequently in that document but not frequently in other documents, or a word that occurs frequently across many documents. From this, the computer program learns that the manually assigned category is associated with particular distinctive features. For example, documents that have been classified under the category 'meteorology' may typically contain the words 'weather', 'climate' and 'forecast'.

Typically, in a practical scenario, the larger the collection of sample documents is, and the more granular the manual classification is, then the more complex, but at the same time more accurate, the learning step is. In the illustrative scenario, the manual classification uses an ontology of categories, although this is not essential.

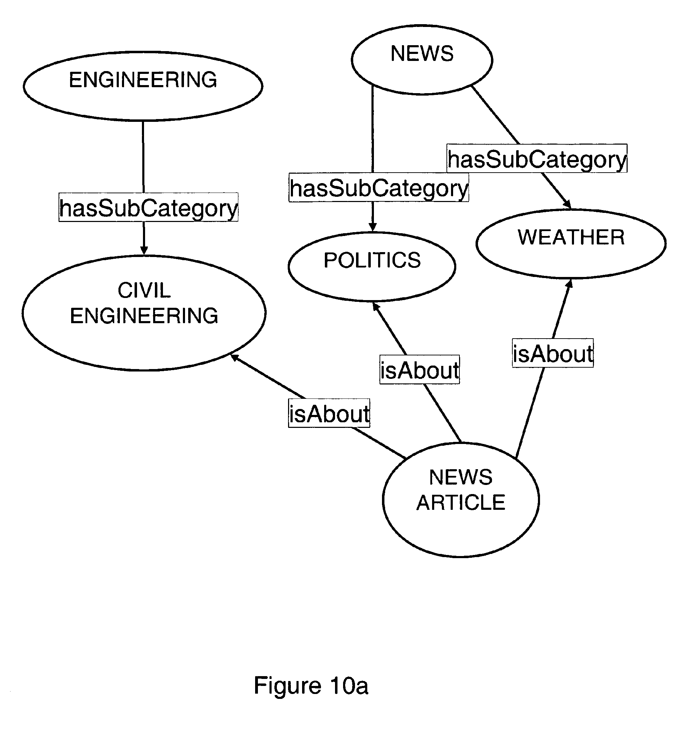

In the present context, an ontology 313 is generally defined as set of concepts that are arranged in a hierarchy of relationships, as illustrated in the diagram in Figure 10a. More particularly, an ontology 313 may be defined as a formal specification of a conceptualisation of a knowledge domain: an ontology language provides a formal framework to describe the concepts (also described as classes or categories) and instances of those concepts which exist in any given domain of interest, and the relationships which hold between them. Figure 10a illustrates a simple example of an extract from an ontology containing news and general categories, which have been associated with some notional news articles. In this example, categories are defined as ontological categories (or classes) and related to each other with a 'hasSubCategory' relationship (often also referred to as the subclass relationship), which defines one category as being a subcategory of another. In particular, the ontology defines:

> The "Engineering" general category 'hasSubCategory' "Civil Engineering"
> The "News" general category 'hasSubCategory' "Politics"
> The "News" general category also 'hasSubCategory' "Weather"

The ontology also contains a 'News Article' category, which is related to the other categories via an 'isAbout' relationship, which can be used to define the categories which a specific article (that is, an instance of category 'News Article') is about. In particular, the ontology defines:

> The "News Article" (class) 'isAbout' the "Civil Engineering" category
> The "News Article" (class) 'isAbout' the "Politics" category
> The "News Article" (class) 'isAbout' the "Weather" category

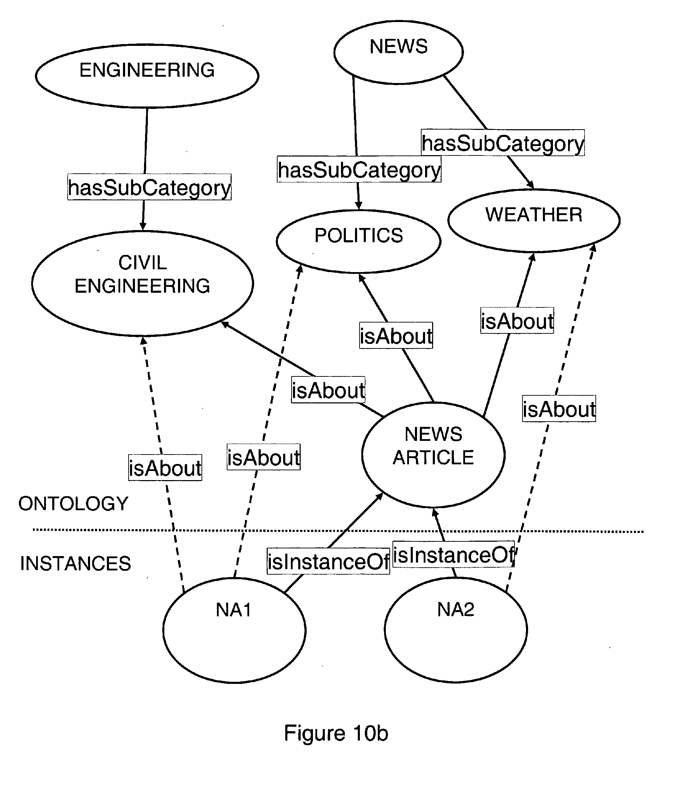

Thus, the categories and relationships define the concepts in a given domain (application area) and the links which can hold between those concepts. Instances of these categories can then be created and it can be specified for which instances the relationships actually hold. So, extending the ontology of Figure 10a, as illustrated in Figure 10b, instances NA1 and NA2 of the category News Article are created, each representing a specific news article. As shown NA2 is specified as being about Weather and NA1 is specified as being about Civil Engineering and Politics (again, using the isABout relationship).

In practice, the ontology is stored on an ontology database 315. An exemplary ontology is the PROTON ontology (see http://proton.semanticweb.org/), which has been developed in the scope of the Semantically-Enabled Knowledge Technologies, or "SEKT", project (see http://proton.semanticweb.org/). The ontology currently has about 400 classes and 100 relationships, but is being adapted all the time.

Thus, using again the example in Figure 10b, the metadata that is associated with the respective subdocument would include the foregoing six relationships, the categories of which appear in an associated ontology, for example the PROTON ontology. Effectively, the metadata connects the subdocument to the respective knowledge domain of the ontology.

It will be appreciated that the classification of a document can be relatively simple, as illustrated in Figure 10b, or extremely complex, in cases where the document mentions many inter-related categories and categories.

In a next step (S910), the program generates a list of associations between the manually classified categories and the distinctive features that are associated with the categories. For Example, one association would be 'documents relating to meteorology mention 'weather', 'climate', and 'forecast'.

At this point in the process, it is possible to begin automated classification of the subdocuments that have been identified hereinbefore.

Hence, in a next step (S915) in the process, each subdocument is analysed by an appropriate computer program, to identify the respective distinguishing features. The distinguishing features of each subdocument are used, with reference to the list of associations that has been generated, to assign automatically respective categories to each subdocument.

In a next step (S920), a score is assigned to each category, the score being representative of how strongly associated the subdocument is to the assigned category. For example, during the process of automatically distinguishing features in a subdocument, all features are identified and compared with the indicative features of the categories. The number of matching features and their frequency in the subdocument are used to generate the score. The subdocuments can then be assigned to categories where the score is greater than a pre-specified threshold or alternatively to the n categories with the highest scores where n is pre-specified. For example, a subdocument with a relatively high occurrence of each of the words 'weather', 'climate' and 'forecast' would be assigned a category 'meteorology', if those words were deemed to be indicative of that category. The score would be higher than for another subdocument, in which, for example, one or more of the words 'weather', 'climate' and 'forecast' has or have a lower rate of occurrence.

It will be appreciated that one advantage of assigning categories to subdocuments, rather than to the original, complete documents, is that the subdocuments are already associated with only one theme, or named entity, and it would be expected that the number of categories associated with each subdocument would be relatively low. This is expected to lead to relatively well-focused searching, as will be described in more detail hereinafter.

Thus, the output of the document categoriser is meta-data, including a link to the subdocument (which is part of the original document), and one or more categories for each subdocument, each category having an associated score. The metadata can also include taster text, which is representative of each subdocument while not being a full copy of the text of the subdocument. The text can be part of the metadata, part of another database or repository that is pointed at by the metadata, or simply pointers to the respective text in the original document. The latter case has the advantage that you do not have to store the text again as a subdocument. However, a disadvantage is that extra processing is required to derive the subdocument and to ensure that the pointers are kept up-to-date if the text changes. In a small document set, it may be acceptable to store replicas of independent taster text. In a large document set, however, it may be prohibitively expensive to store each independent instance of taster text.

The metadata is stored in the metadata database 320, from where is can be queried by the search engine 325, in order to generate meaningful search results.

The second, searching stage (S205) of the illustrative scenario will now be described.

The process described thus far is carried out during an indexing stage (S200) and in advance of a search operation being carried out. At search time, according to preferred embodiments, the relevance of each of the subdocuments to a search context is determined in relation to both a user query and a user 'interest profile'.

A user query can take the form of keywords, as is commonly the case nowadays when using known Web search engines. For example, a keyword search string might include the keywords "George Bush" and "Iraq", or it can take the form of a more complex search construct, for example to find all documents referring to (Person that hasPosition 'CEO' within a 'Company', locatedIn a 'Country', called the "UK"). This query is intended to find documents that mention CEOs of UK-based companies. This is an example of a semantic query, that one might associate with the so-called Semantic Web, wherein documents are more widely accompanied with structured and descriptive metadata, which is designed to facilitate such semantic queries.

Thus, a search query according to embodiments of the present invention may involve keywords, a semantic query or any other kind of appropriate query.

Additionally, in the present illustrative scenario, each user has a user interest profile, which contains, in this case, categories, which represent the key interests of the user. The interest profile can be generated manually by each user, or it can be determined, or adapted, semi-automatically or automatically, by a monitoring process that monitors the browsing and/or searching behaviour of the user.

In one exemplary scenario, the monitoring process is only semi-automatic, whereby the process provides the user with an option (for example using a pop-up "yes/no" dialog box) to add to the interest profile categories associated with a document, which has been downloaded and is being inspected by the user. If the user responds in the affirmative to the pop-up or dialog box, the monitoring process adds the categories that are associated with the document to the interest profile. Instead of a pop-up dialog box, the user interface of a search engine may simply have a tick box, or the like, which a user can tick for each document that should influence the interest profile. Many alternative user interface options may be devised.

In an alternative scenario, the monitoring process is fully automated, whereby the process adds categories automatically to the interest profile in dependence upon certain criteria. For example, the criteria might be that the user has downloaded the document and spent more than a brief period inspecting the contents thereof. Many other criteria may be devised for determining whether to modify the interest profile.

In any event, the monitoring process may be able to extract the categories from metadata that is associated with each document (if that metadata already exists, for example, due to pre-processing of the kind already mentioned). Alternatively, or in addition, when a document is downloaded, as an automatic background task, the monitoring process may apply such methods to classify documents, and associate them with categories, as they are retrieved by the user.

Additionally, each category can be assigned a level of interest to the user, for example, in dependence upon the frequency with which that category is associated with downloaded documents.

It will be appreciated that, over a significant period of time, an interest profile can become large and complex. However, over time, the profile is also expected to become highly representative of the particular interests of a user.

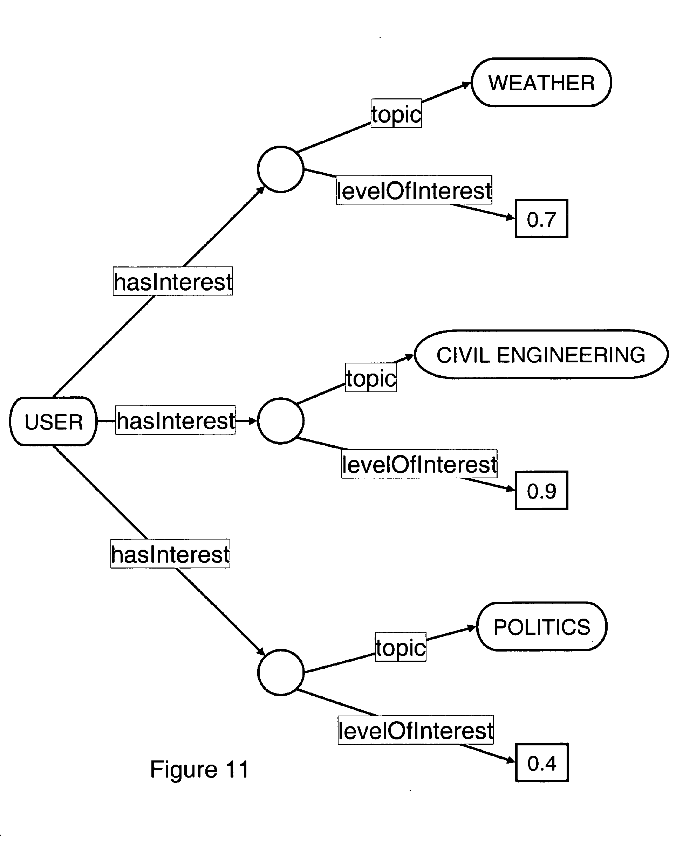

The tree-diagram in Figure 11 illustrates an exemplary user interest profile, in which a user has an interest in (denoted "hasInterest") a number of categories, each having an associated level of interest (denoted "levelOfInterest"). As shown, the exemplary interest profile has three categories of interest, which were introduced in the ontology shown in Figure 9 - "weather", "civil engineering" and "politics" - and these categories have respective levels of interest 0.7, 0.9 and 0.4, which can be used, as described hereinafter, to determine the presentation format of search results.

The actual search operation can be done in many different ways. For example, in a simple keyword search, the keywords are compared with keyword metadata, of known kind, that is associated with each sub-

document. Such keyword metadata may be part of the metadata in the metadata database or may be part of a different 'keyword' metadata resource of a known kind. As has been described, such a keyword search can return a huge number of hits, which are not necessarily arranged with the more relevant hits near the top. However, having identified a subset of the subdocuments as being potentially relevant to the user, a next step in the search operation is to compare the user interest profile of categories with the categories that are associated with the subset of subdocuments. In this way, the search process can establish which subdocuments are likely to be of most interest to the user, and arrange the results accordingly.

Alternatively, the search may not involve a keyword search step as such, wherein the keywords are compared to keyword metadata. In this case, for example, the search might involve only comparing the keywords, and the user profile categories, with the categories that are associated with all of the subdocuments. In any event, the search might involve only one of either the keywords or the user interest profile of categories, rather than both. The skilled person, possibly through experience or carrying out multiple search experiments, would be able to determine which approach to searching provides the most appropriate search results.

The third stage (S210) of the illustrative scenario is to present the search results to a user in a meaningful way. Of course, many ways of presenting search results are already known. It is common, for example, to present results in a ranked list of the kind illustrated in Figure 1, in which each search result comprises a hyperlink, which is the title of the document, and a 'taster' of representative text.

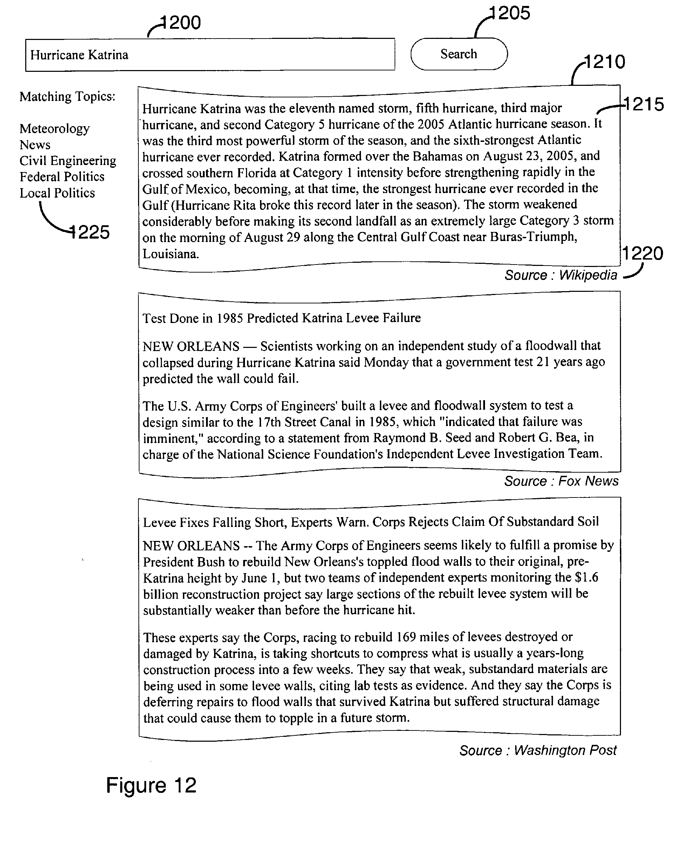

In the present illustrative scenario, search results are presented in a different way, by the search engine 325, as illustrated in the diagram in Figure 12. As with known search engines, the user interface comprises a text box 1200 into which the user enters their query and a search button 1205, to be clicked on to submit the search query. The diagram also shows three exemplary search results 1210, which comprise individual portions of text 1215, each with a Source 1220, indicating where the document was found. The Source also doubles up as a hyperlink, which can be used to download the original document.

The diagram in Figure 12 shows the search results as a consolidated document, comprising text from the most relevant subdocuments, where the most relevant subdocuments are associated with assigned categories that the highest scores. Each portion of text can be the text of the entire subdocument, or merely a portion thereof.

Known 'tasters', for example, could be used in this context. However, tasters are typically generated in a relatively simple way, for example, comprising a fixed-length selection of text surrounding the first occurrence of first keyword, and may not provide the user with sufficient information to make an informed decision about the relevance of the document, without downloading the entire document and analysing it.

Preferably, the text that is presented in the consolidated document is generated by the search engine using one or more of the following:

- The text of each subdocument of the consolidated document is summarised using known text summarisation techniques. One suitable summarisation technique is described in Davies NJ et al 'ProSum - profile-based text summarisation', First Automatic Text Summarisation Conference (SUMMAC-1), Virginia, USA (May 199). Such techniques are designed to reduce the length of the text while maintaining sufficient grammatical context to provide the reader with a reasonable understanding of the document. Parameters applied to the summarisation algorithm determine how short the text length becomes. Obviously, a shorter text is desirable from a display perspective but with that comes reduced coherence. Since many sub-documents may describe similar things it may be appropriate to apply automatic summarisation techniques to the combined result in order to remove repetition or present the consolidated result more concisely.

- The size and ordering of the contents of the consolidated document is biased to include more text from documents that have a higher relevance score and less text from documents that have a lower relevance score. For example, if the user has the category 'Civil Engineering' in their interest profile (as illustrated in the diagram in Figure 11), subdocuments with this category might have a greater match, and the user would want to see more of the respective material about this category, in the early part of the consolidated document.

- The degree of match, according to category relevance score, is used as a factor in determining how much of the subdocument to present to the user, or, if the automatic summarisation techniques are used, to determine how much of the summary obtained should consist of material from higher or lower ranked subdocuments. In addition, this technique could also be applied to the traditional tasters mentioned above: for example, by providing longer tasters for documents higher up in the ranking and shorter tasters for those further down.

- As illustrated in Figure 12, in the top left hand corner, the categories 1225 that are associated with the search results are listed. A user is able to select one of the categories, which is a simple hyperlink, to view the subdocument portions in the consolidated document that correspond to the selection. In addition, it is possible to re-create the consolidated document, by selecting a different highest ranking category in the interest profile (for example "Politics"). The consolidated document would then be regenerated by the search engine with the results associated most with "Politics" being presented higher up, and with possibly more text, in the consolidated document, thereby giving greater emphasis to the selected category.

As can be seen in Figure 12, the returned search results for each of the three exemplary hits contains about the same amount of text. By contrast to the search results illustrated in Figure 1, of which the top results do not appear to have a common theme, other than 'Hurricane Katrina', it is clear that the hits in Figure 12 relate to the weather or civil engineering aspects of Hurricane Katrina. This is achieved because the user interest profile in Figure 12 dictates that the highest interest levels relate to weather and civil engineering, even though those terms, as such, do not appear in the search query or documents. Indeed, had the terms been included in the search query, a lack of the terms in the documents may have resulted in the documents being missed entirely.

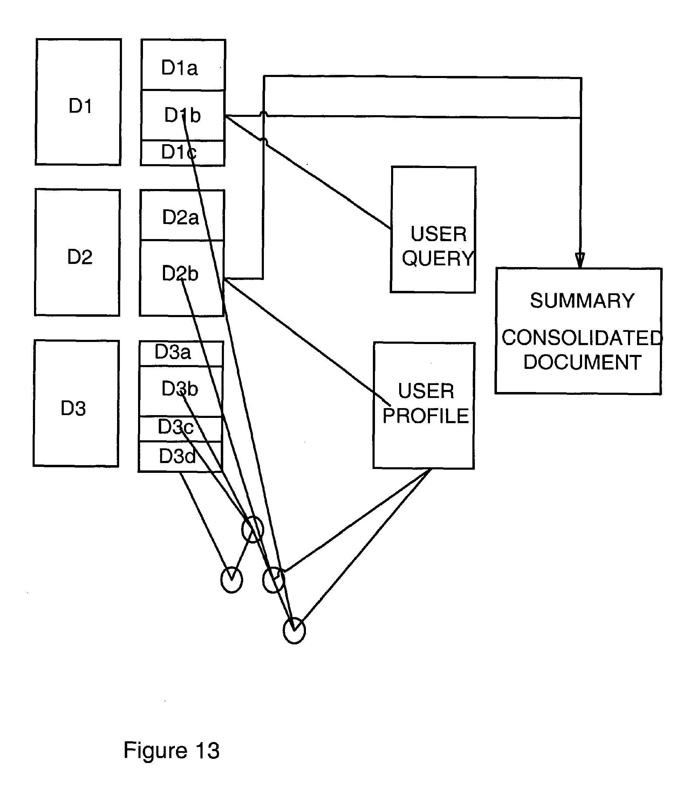

The three stages of the overall illustrative scenario are summarised in the block diagram in Figure 13. Figure 13 shows three documents, D1-D3, which are split in the first stage (S200) into subdocuments D1a-D3d and classified against an ontology 313. The search query of the second stage (S205) is shown as comprising a user query and user interest profile. Finally, the consolidated document of the third stage is shown, having been generated from the subdocuments.

As already indicated, an advantage of classifying the references to named entities against an ontology (or other hierarchical or relational arrangement) is that it then becomes possible to apply reasoning to various steps of the overall scenario.

As has been described, reasoning makes use of the relationships in the ontology. These relationships may be the sub and super category relationships and additional relationships may also exist between categories and these can also be exploited by reasoning.

First, reasoning may be applied during the Text-Tiling process, in order to draw relationships between documents that would not otherwise be seen as being related to one another. For example, assume a first block of text refers to a named entity of category 'Vertebrate', while the second block of text refers to a named entity of category 'Reptile', for example 'lizard'.

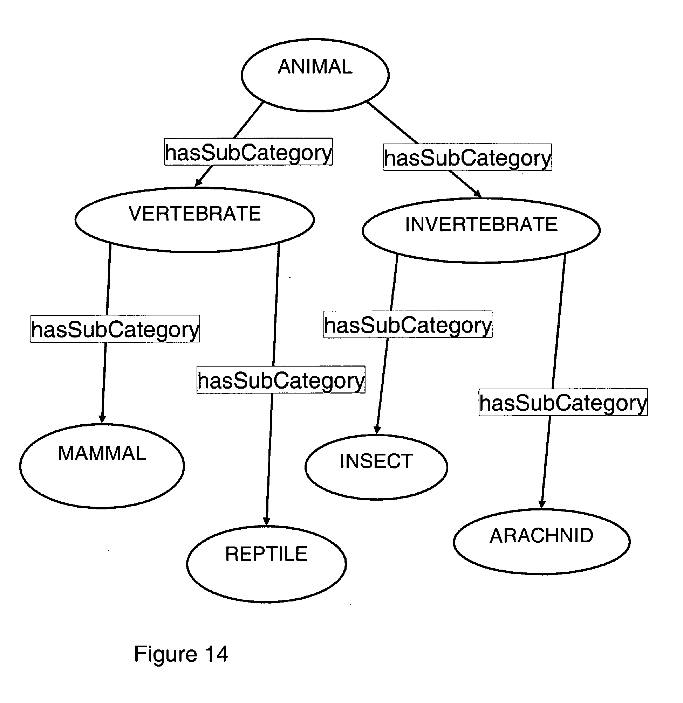

According to the process described with reference to Figures 7 and 8, these two blocks of text would not be found to be lexically similar, even after applying Information Extraction. However, reasoning can overcome this limitation and be used to draw a relationship, which may be found sufficient to cause the blocks to be combined into a single subdocument. More particularly, with reference to the tree diagram in Figure 14 (which represents part of a biological ontology), reasoning over the ontology 313 is used to determine that 'Reptile' is a direct sub category of 'Vertebrate'. Hence, reasoning determines that there is a semantic distance of only 1 between 'Reptile' and 'Vertebrate'. In contrast, if the first block names 'Animal', it is determined that 'Reptile' is an indirect sub-category of 'Animal' with semantic distance 2. That is, there are two semantic relationships separating Animal and Reptile. In a variation of the approach, the semantic relationships could themselves be weighted according the 'semantic closeness' or similarity of the concepts and these weighting factors applied when calculating the semantic distance.

Therefore, during the TextTiling process, with respect to the named entity Reptile in a second block, reasoning would apply a higher weighting to a first block relating to Vertebrate than to a block relating to Animal. Then, during the boundary determining process (S730), these weightings would influence the similarity scores. For example, consecutive blocks with a high relationship weighting might not be separated, even if the similarity score was below the threshold for splitting.

A similar set of principles can be applied to searching. For example, if a query includes 'Reptile', the search engine might apply reasoning so that documents relating to 'Vertebrate' are returned (with a ranking below that of documents that specifically relate to 'Reptile') even though they do not relate specifically to Reptile, due to the low semantic distance between the categories. Documents relating to Animal, however, may not be returned, due to the increased semantic distance and, by implication, relatively lower relevance.

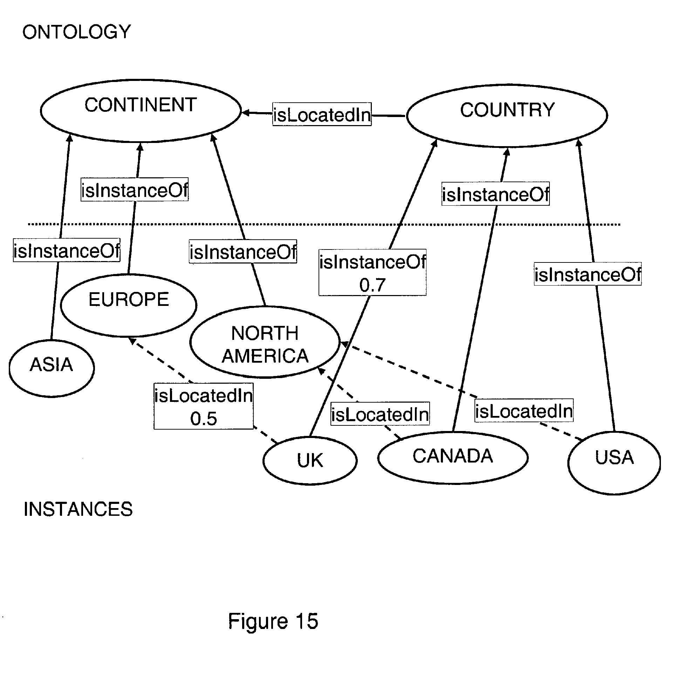

Such reasoning capability is not limited to the subcategory relationship but can be applied over a richer set of relationships. Considering the ontology fragment depicted in Figure 15, for example, text blocks mentioning Europe would be considered to be more closely linked to those mentioning UK than to those mentioning USA, since UK is linked directly to Europe by the isLocatedIn relationship. It is also possible to add weights to the relationships isLocatedIn and isInstanceOf, of 0.5 and 0.7 respectively, (as shown, for illustration, in only two relationships in Figure 15) in order to reflect the fact that the isLocatedIn relationship is a more significant semantic link that the isInstance0f relationship.

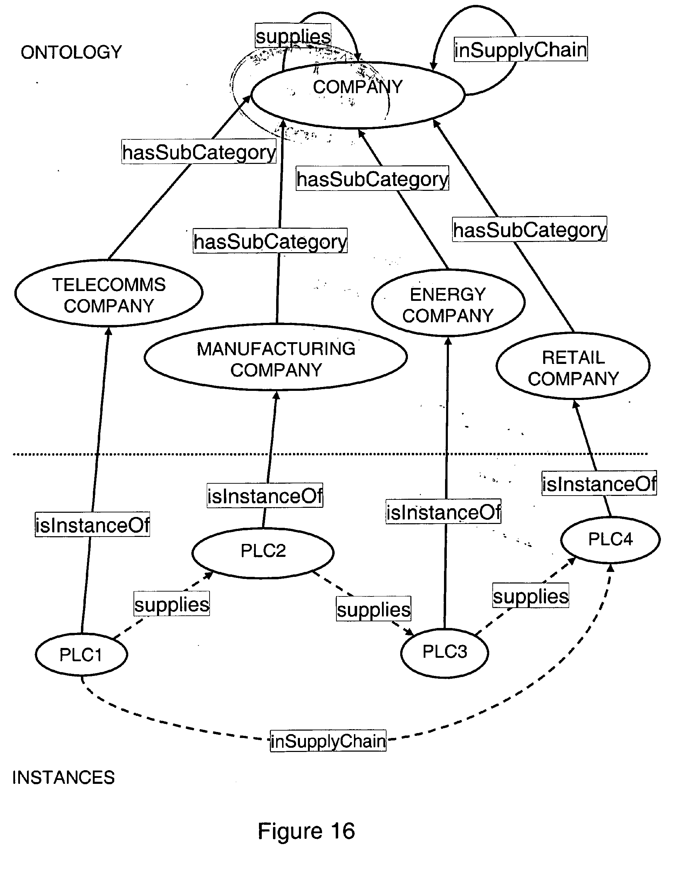

Another aspect of ontological reasoning is the ability to specify rules or axioms which allow new facts to be inferred from those already represented in the ontology. This is important since it can lead to the identification of closer semantic distance than is apparent from the ontology itself. For example, consider four companies PLC1, PLC2, PLC3 and PLC4 operating in the telecommunications, manufacturing, energy and retail sectors respectively, as show in Figure 16. Assume that PLC1 is a supplier to PLC2, which supplies PLC3, which in turn supplies PLC4. The distance between PLC1 and PLC4 would be considered three ("3") based purely on the ontological structure. However, it would be possible to define two rules linking suppliers as follows:

R1    IF supplies(X,Y) THEN inSupplyChain(X,Y)

R2    IF supplies(X,Y) & inSupplyChain(Y,Z) THEN inSupplyChain(X,Z)

R1 states that if one company supplies another, they are part of the same supply chain. R2 states that if one company supplies a second who is part of the same supply chain as a third company, the first and third companies are part of the same supply chain. From these two rules, and the ontology depicted in Figure 16, it can be inferred that:

$$inSupplyChain(PLC1, PLC4)$$

That is, companies PLC1 and PLC4 are in the same supply chain, giving them a semantic distance of only one. Accordingly, using reasoning of this kind, a search for PLC1 would return results including mentions of PLC4 but not PLC1.

The above embodiments are to be understood as illustrative examples of the invention. Further embodiments of the invention are envisaged and will be evident to the skilled person. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1.  An computer-implemented method of indexing documents in a document repository comprising splitting the documents into subdocuments, each subdocument relating to a theme, by identifying semantic relationships between entities in the document and determining changes in theme at least in part on the basis of the distribution of semantically-related entities, and performing an indexing operation by generating and storing, in a searchable index, metadata associated with the respective subdocuments.

2.  A method according to claim 1, comprising identifying semantic relationships between entities referred to by different associated textual references.

3.  A method according to either preceding claim, comprising applying Named Entity Extraction in order to relate different associated textual references to the same entity.

**4.** A method according to any one of the preceding claims, comprising establishing a semantic distance between different entities in the document and relating entities according to the semantic distance.

**5.** A method according to claim 4, wherein one entity is a subcategory of another related entity.

**6.** A method according to claim 4 or claim 5, wherein one entity has a sub or super category relationship with a related entity.

**7.** A method according to any one of claims 5 to 7, wherein one entity is related to another entity by an inferred relationship.

**8.** A method according to claim 7, comprising inferring the relationship between entities using a rule or axiom.

**9.** A method according to any one of the preceding claims, comprising a subdocument which includes two component portions of text that are lexically dissimilar.

**10.** A method according to claim 9, wherein a first one of the components includes an entity that is semantically related to an entity in a second one of the components.

**11.** A method according to any one of the preceding claims, wherein a plurality of the entities are related by an ontology.

**12.** A method according to either preceding claim, comprising associating each subdocument with one or more categories, from a predetermined set of categories, according to the content of the subdocument.

**13.** A method according to claim 12, wherein the categories are arranged in a hierarchy of categories.

**14.** A method according to claim 12 or claim 13, wherein the categories reside in an ontology of categories.

**15.** A method according to any one of claims 12 to 14, wherein the metadata includes the categories, or references to the categories, that are associated with each subdocument.

**16.** A method according to any one of claims 12 to 15, including assigning a relevance score to each associated category, the relevance score indicating a derived degree of relevance of the category to the respective subdocument.

**17.** A method according to any one of the preceding claims, wherein the metadata includes pointers to documents in the repository.

**18.** A method according to claim 17, wherein the pointers identify the locations of subdocuments within the documents.

**19.** A method of retrieving documents of interest from a document repository, including:

- indexing documents according to the method of any one of claims 1 to 18;
- submitting a search context;
- using the search context, on the basis of the categories that have been associated with the subdocuments, to identify documents of interest by reference to the metadata; and
- returning information relating to the identified documents of interest.

**20.** A method according to claim 19, wherein the information relating to the identified documents of interest comprises a consolidated document.

**21.** A method according to claim 20, comprising generating the consolidated document to include text from at least some of the subdocuments and a link, associated with each subdocument text, to the respective document in the document repository.

**22.** A method according to any one of claims 19 to 21, wherein the search context comprises a search query.

**23.** A method according to any one of claims 20 to 23, wherein the search context comprises a user interest profile including categories of interest to the respective user.

**24.** A method according to claim 23, including ordering the text of the subdocuments according to the categories of interest.

**25.** A system adapted to perform the method of any one of the preceding claims.

# EP 1 843 257 A1

100

hurricane katrina - Yahoo! Search Results - Microsoft Internet Explorer provided by BT Configuration D

File   Edit   View   Favorites   Tools   Help

Yahoo!  My Yahoo!  Mail   Welcome, Guest [Sign In]                                    Search Home  Help

Web | Images | Video | Audio | Directory | Local | News | Shopping | More »

**YAHOO! SEARCH**   hurricane katrina                                      Search

My Web    Answers BETA                          Search Services    Advanced Search    Preferences

**Search Results**              Results 1 - 10 of about 43,700,000 for hurricane katrina - 0.07 sec. (About this page)

Also try: hurricane katrina pictures, hurricane katrina date   More...

SPONSOR RESULTS

- Red Cross: **Hurricane Katrina** Appeal
  www.redcross.org.uk     Please donate directly to the American Red
  Cross at www.redcross.org today.

Y! News Results for **hurricane katrina**
Carpentry instructor observes recovery from **Hurricane Katrina** - Sioux City
Journal - Mar 12 11:21 PM
U of M architecture students help **Hurricane Katrina** victims - KARE 11
Minneapolis-St. Paul - Mar 12 12:39 PM
**Hurricane Katrina**: Louisianans take refuge locally - Benton Courier - Mar
11 5:38 PM
Yahoo! Shortcut - About

110                          120

1. FEMA **Hurricane Katrina** Information 🗎
   **Hurricane Katrina** news, press releases, disaster declarations, and how to
   get help for victims and evacuees. Also includes state emergency
   management links for evacuations, preparations, shelters, and safety. In
   English and Spanish.
   Category: Hurricane Katrina 2005
   www.fema.gov/press/2005/resources_katrina.shtm - 21k - Cached - More
   from this site - Save

2. **Hurricane Katrina** - Yahoo! News Full Coverage 🗎
   Provides ongoing, in-depth coverage of **Hurricane Katrina** and the storm's
   aftermath, with articles, audio, video, and photographs.
   Category: Hurricane Katrina 2005
   news.yahoo.com/fc/us/hurricane_katrina - 26k - Cached - More from this
   site - Save

3. **Hurricane Katrina** Recovery on FirstGov.gov 🗎
   Find out what to do if you are a victim of the 2005 storm, **Hurricane Katrina**,
   how to find missing persons or evacuees, help victims and communities
   devastated by flooding, or locate disaster cleanup and agency resources.
   Category: Hurricane Katrina Relief Efforts
   firstgov.gov/Citizen/.../PublicSafety/**Hurricane_Katrina**_Recovery.shtml -
   36k - Cached - More from this site - Save

4. New Orleans Times-Picayune 🗎
   New Orleans' daily newspaper, the Times-Picayune. Chronicling the city's

## Figure 1

14

PRE-PROCESS DOCUMENTS — S200

GENERATE & SUBMIT QUERY — S205

PRESENT SEARCH RESULTS — S210

Figure 2

DOWNLOAD DOCUMENTS — S500

SPLIT DOCUMENTS — S505

CATEGORISE SUBDOCUMENTS — S510

GENERATE METADATA DATABASE — S515

Figure 5

Figure 3

DOCUMENTS
(D1-D3)

METADATA
(610, 615)

SUBDOCUMENTS
(D1a-D3d)

| | | |
|---|---|---|
| 405 | 410 | 415 |

400

315

313

320

318

Figure 4

Figure 6

S700 — TOKENIZATION

S705 — SUBDIVIDE INTO TOKEN SEQUENCES

S710 — STORE AND INDEX TOKEN SEQUENCES

S715 — COMPARE ADJACENT BLOCKS

S720 — ASSIGN SCORES TO TOKEN SEQUENCE GAPS

S725 — PLOT RESULTS & SMOOTH CURVE

S730 — DETERMINE DOCUMENT BOUNDARIES

Figure 7

IDENTIFY NAMED ENTITIES — S800

IDENBTIFY IMPLICIT REFERENCES — S805

REPLACE IMPLICIT REFERENCES — S810

ENACT FIGURE 6 — S815

Figure 8

MANUALLY CLASSIFY DOCUMENTS — S900

LEARN DISTINCTIVE DOCUMENT FEATURES — S905

ASSOCAITE TOPICS WITH FEATURES — S910

AUTOMATICALLY IDENTIFY DISTINGUISHING FEATURES — S915

ASSIGN A SCORE TO EACH TOPIC — S920

Figure 9

Figure 10a

Figure 10b

Figure 11

1200

1205

Hurricane Katrina

Search

1210

Matching Topics:

Meteorology
News
Civil Engineering
Federal Politics
Local Politics

1225

1215

Hurricane Katrina was the eleventh named storm, fifth hurricane, third major hurricane, and second Category 5 hurricane of the 2005 Atlantic hurricane season. It was the third most powerful storm of the season, and the sixth-strongest Atlantic hurricane ever recorded. Katrina formed over the Bahamas on August 23, 2005, and crossed southern Florida at Category 1 intensity before strengthening rapidly in the Gulf of Mexico, becoming, at that time, the strongest hurricane ever recorded in the Gulf (Hurricane Rita broke this record later in the season). The storm weakened considerably before making its second landfall as an extremely large Category 3 storm on the morning of August 29 along the Central Gulf Coast near Buras-Triumph, Louisiana.

1220

*Source : Wikipedia*

Test Done in 1985 Predicted Katrina Levee Failure

NEW ORLEANS — Scientists working on an independent study of a floodwall that collapsed during Hurricane Katrina said Monday that a government test 21 years ago predicted the wall could fail.

The U.S. Army Corps of Engineers' built a levee and floodwall system to test a design similar to the 17th Street Canal in 1985, which "indicated that failure was imminent," according to a statement from Raymond B. Seed and Robert G. Bea, in charge of the National Science Foundation's Independent Levee Investigation Team.

*Source : Fox News*

Levee Fixes Falling Short, Experts Warn. Corps Rejects Claim Of Substandard Soil

NEW ORLEANS -- The Army Corps of Engineers seems likely to fulfill a promise by President Bush to rebuild New Orleans's toppled flood walls to their original, pre-Katrina height by June 1, but two teams of independent experts monitoring the $1.6 billion reconstruction project say large sections of the rebuilt levee system will be substantially weaker than before the hurricane hit.

These experts say the Corps, racing to rebuild 169 miles of levees destroyed or damaged by Katrina, is taking shortcuts to compress what is usually a years-long construction process into a few weeks. They say that weak, substandard materials are being used in some levee walls, citing lab tests as evidence. And they say the Corps is deferring repairs to flood walls that survived Katrina but suffered structural damage that could cause them to topple in a future storm.

*Source : Washington Post*

## Figure 12

Figure 13

Figure 14

ONTOLOGY

Figure 15

INSTANCES

ONTOLOGY

supplies

inSupplyChain

COMPANY

hasSubCategory

hasSubCategory

hasSubCategory

hasSubCategory

TELECOMMS
COMPANY

ENERGY
COMPANY

MANUFACTURING
COMPANY

RETAIL
COMPANY

isInstanceOf

isInstanceOf

isInstanceOf

isInstanceOf

isInstanceOf

PLC2

PLC4

supplies

supplies

supplies

PLC1

PLC3

inSupplyChain

INSTANCES

Figure 16

**European Patent Office**

# EUROPEAN SEARCH REPORT

Application Number

EP 06 25 1886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | HEARST M A: "Multi-paragraph segmentation of expository text" ANNUAL MEETING OF THE ASSOCIATION FOR COMPUTATIONAL LINGUISTICS. PROCEEDINGS OF THE CONFERENCE, ARLINGTON, VA, US, 26 June 1994 (1994-06-26), pages 9-16, XP002115997 * the whole document * | 1,19 | INV. G06F17/30 G06F17/27 |
| X | REYNAR J C: "Statistical Models for Topic Segmentation" PROCEEDINGS OF THE 37TH ANNUAL MEETING OF THE ASSOCIATION FOR COMPUTATIONAL LINGUISTICS ON COMPUTATIONAL LINGUISTICS, [Online] 1999, pages 357-364, XP002394471 ISBN: 1-55860-609-3 Retrieved from the Internet: URL:http://portal.acm.org/citation.cfm?id=1034735&dl=GUIDE&coll=&CFID=15151515&CFTOKEN=6184618> [retrieved on 2006-08-10] * the whole document * | 1-3,19 | |
| X | US 2005/216443 A1 (MORTON MICHAEL S ET AL) 29 September 2005 (2005-09-29) * paragraph [0016] - paragraph [0039] * * paragraph [0057] - paragraph [0060]; figure 1 * * paragraph [0171] - paragraph [0177]; figure 12 * * paragraph [0194] - paragraph [0216]; figure 14 * * paragraph [0254] - paragraph [0277]; figure 15 * | 1,19 | TECHNICAL FIELDS SEARCHED (IPC) G06F |

-/--

The present search report has been drawn up for all claims

| Place of search | Date of completion of the search | Examiner |
|---|---|---|
| Berlin | 14 August 2006 | Lechenne-Stiller, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 25 1886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BUDANITSKY A ET AL: "Semantic distance in WordNet: An experimental, application-oriented evaluation of five measures" WORKSHOP ON WORDNET AND OTHER LEXICAL RESOURCES, IN THE NORTH AMERICAN CHAPTER OF THE ASSOCIATION FOR COMPUTATIONAL LINGUISTICS (NAACL-2001), [Online] June 2001 (2001-06), XP002394584 Pittsburgh, PA Retrieved from the Internet: URL:http://citeseer.ist.psu.edu/budanitsky 01semantic.html> [retrieved on 2006-08-11] * the whole document * ----- | 1,4-8 | |
| A | US 2006/047500 A1 (HUMPHREYS KEVIN W ET AL) 2 March 2006 (2006-03-02) * abstract * * paragraph [0043] * * paragraph [0076] * * claim 25 * ----- | 1-25 | |
| D,A | BEEFERMAN D ET AL: "Statistical models for text segmentation" MACHINE LEARNING, KLUWER ACADEMIC PUBLISHERS, BOSTON, US, vol. 34, no. 1-3, February 1999 (1999-02), pages 177-210, XP002374907 ISSN: 0885-6125 * the whole document * ----- | 1-25 | TECHNICAL FIELDS SEARCHED (IPC) |
| D,A | CHOI F ET AL: "Linear text segmentation: approaches, advances and applications""[Online] 2000, XP002394463 Retrieved from the Internet: URL:http://citeseer.ist.psu.edu/choi00line ar.html> [retrieved on 2006-08-10] * the whole document * ----- -/-- | 1-25 | |

The present search report has been drawn up for all claims

| Place of search | Date of completion of the search | Examiner |
|---|---|---|
| Berlin | 14 August 2006 | Lechenne-Stiller, L |

EPO FORM 1503 03.82 (P04C01)

**European Patent Office**

**EUROPEAN SEARCH REPORT**

Application Number

EP 06 25 1886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | CUNNINGHAM H: "Information Extraction, Automatic"" ENCYCLOPEDIA OF LANGUAGE AND LINGUISTICS, 2D EDITION, [Online] 2005, XP002394464 Retrieved from the Internet: URL:http://gate.ac.uk/sale/ell2/ie/main.pdf> [retrieved on 2006-08-10] * the whole document * ----- | 1-25 | |

TECHNICAL FIELDS SEARCHED (IPC)

The present search report has been drawn up for all claims

| Place of search | Date of completion of the search | Examiner |
|---|---|---|
| Berlin | 14 August 2006 | Lechenne-Stiller, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................................
& : member of the same patent family, corresponding document

EPO FORM 1503 03.82 (P04C01)

**ANNEX TO THE EUROPEAN SEARCH REPORT**

**ON EUROPEAN PATENT APPLICATION NO.**

EP 06 25 1886

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2006

| Patent document cited in search report | Publication date | Patent family member(s) | Publication date |
|---|---|---|---|
| US 2005216443    A1 | 29-09-2005 | NONE | |
| US 2006047500    A1 | 02-03-2006 | US    2006047690 A1<br>US    2006047691 A1 | 02-03-2006<br>02-03-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVIES NJ et al.** ProSum - profile-based text summarisation. *First Automatic Text Summarisation Conference (SUMMAC-1*